# EUROPEAN PATENT SPECIFICATION

(11) **EP 4 032 518 B1**
(45) Date of publication and mention of the grant of the patent: **09.10.2024**
(21) Application number: 22150704.9
(22) Date of filing: 10.01.2022
(51) Int. Cl.: A61G 3/06, B60P 1/43, B66B 9/08, B60P 1/44

(54) **A VEHICLE WITH A COMBINED ENTRANCE AND EMERGENCY EXIT FOR PASSENGERS**
FAHRZEUG MIT KOMBINIERTEM EINGANG UND NOTAUSGANG FÜR INSASSEN
VÉHICULE DOTÉ D'UNE ENTRÉE ET D'UNE SORTIE D'URGENCE COMBINÉES POUR PASSAGERS

(30) Priority: 22.01.2021 DK PA202100064
(43) Date of publication of application: 27.07.2022
(73) Proprietor: Autoproducts ApS, 7400 Herning (DK)
(72) Inventor: Pedersen, Dan Bork, Christiansfeld (DK)
(74) Representative: Larsen & Birkeholm A/S

(56) References cited:
- GB-A- 2 403 203
- GB-A- 2 547 027

## Description

### Technical field of the invention

The present invention relates to vehicle emergency exits.

### Background of the invention

To aid in the transportation of mobility-impaired individuals, lifts, ramps, and other devices are known for providing access to vehicles, such as vans, minivans, buses, sport utility vehicles ("SUV"), and the like. Lifts are e.g., installed in the doorway of a full-sized van, bus, or SUV. Lifts generally include a platform that is moveable from the ground surface to the floor level of the vehicle. Power for moving the platform is usually provided by electric motors or hydraulic, pneumatic, or electric actuators. Alternatively, the lower vehicle floor height provided by minivans and similar vehicles allows ramps to be installed instead of lifts. Different types of ramps include folding ramps, swing-out ramps, and ramps that are stored within a cassette provided in the floor of the vehicle. Each type of ramp is generally moveable between a deployed position for providing access to the vehicle, and a stowed position, where the ramp is moved to a position inside the vehicle structure. Ramps can be moved between the stowed and deployed positions automatically or manually. Automatic ramps generally use electric motors, hydraulics, or pneumatics to move the ramp between the stowed and deployed positions. Manually operated ramps are generally stowed or deployed by grasping the ramp itself. Some platforms functions both as a lift and as a ramp.

Many ramps used today are stored within the passenger compartment of the vehicle, and many can be folded together to use up less space.

When the ramp is in the storage position, it is very common for the ramp to bounce or vibrate as the vehicle is in motion. Such constant vibration can cause unwanted noise inside the vehicle. Dirt and melting snow from the ramp are also brought into the passenger compartment after use of the ramp in mud and snow. A further problem with such a solution is that the entrance opening in which the door is mounted must serve as an emergency exit. When a random person passes by a vehicle accident site, he or she wants to help the passengers inside the vehicle to escape. Intuitively, the person will open the door, will see a ramp blocking the access, and seek for an alternative access into the passenger compartment. Although release mechanisms may exist within the compartment, the person will not at first seek for such a mechanism. This is problematic, as valuable seconds or minutes may be wasted.

GB2403203 discloses a lift comprising a load-bearing platform and at least one handrail. The load-bearing platform is in operative engagement with at least two arm members. Each arm member is in operative engagement with a fixed member located on a surface of a vehicle. The lift also comprises means for removing the load-bearing platform in a partially or fully deployed condition along a lateral axis of a vehicle. This is advantageous as the load-bearing platform can be adjusted to avoid obstructions at an accident or obstructions in an emergency vehicle e.g., cabinets and medical equipment or the like.

### Description of the invention

It is an object of the present invention to overcome the above-mentioned problems. The present invention provides a solution where a random person passing by a vehicle accident site can intuitively access and clear the emergency exit in a vehicle, such that passengers within said vehicle can exit therethrough.

A first aspect relates to a vehicle, such as a bus, a minivan, or the like, with a combined entrance and emergency exit for passengers, said combined entrance and emergency exit comprising:
- a door or hatch covering an entrance opening to an interior passenger compartment of said vehicle; and
- a hydraulic or pneumatic operated lift and/or ramp assembly comprising a swing-out ramp adapted to be positioned in front of said door or hatch in its retracted and raised position, thereby blocking said door or hatch from being opened, and adapted to be positioned at a lower level than said door or hatch in its forwarded and lowered position, thereby allowing said door or hatch to be opened;
   wherein said hydraulic operated lift and/or ramp assembly further comprises one or more hydraulic or pneumatic actuators operably connected to said swing-out ramp, and a first pressure release valve operably coupled to a first emergency actuator, wherein said first pressure release valve, upon activation of said first emergency actuator, such as a handle, a turn knob, push button, or the like, is configured to lower the fluid pressure in said one or more hydraulic or pneumatic actuators, thereby lowering said swing-out ramp from its retracted and raised position to its forwarded and lowered position;
   wherein said first emergency actuator is positioned on said swing-out ramp and/or integrated into said swing-out ramp.

The first emergency actuator may in some embodiments be integrated into a frame of said swing-out ramp.

A random person passing by a vehicle accident site will intuitively see the first emergency actuator on the swing-out ramp, that is preferably colored red or yellow, or another color indicating emergency, and activate it to lower the swing-out ramp. Then the person can open the door(s) to the passenger compartment and rapidly help the passengers inside.

In one or more embodiments, the entrance opening is located at the rear end of said vehicle.

In one or more embodiments, the hydraulic or pneumatic operated lift and/or ramp assembly further comprises a second emergency actuator, such as a handle, a turn knob, push button, or the like, operably coupled to said pressure release valve, and wherein said second emergency actuator is positioned within said interior passenger compartment. This embodiment allows the passenger to lower the swing-out ramp from within the passenger compartment and to escape through the door(s).

In one or more embodiments, the hydraulic or pneumatic operated lift and/or ramp assembly further comprises a second pressure release valve operably coupled to a second emergency actuator, such as a handle, a turn knob, push button, or the like, wherein said second pressure release valve, upon activation of said second emergency actuator, is configured to lower the fluid pressure in said one or more hydraulic or pneumatic actuators, thereby lowering said swing-out ramp from its retracted and raised position to its forwarded and lowered position; wherein said second emergency actuator is positioned within said interior passenger compartment.

In one or more embodiments, the first and/or second emergency actuator is configured as a handle, turn knob, push button, or the like, and operably connected, respectively, to said first or second pressure release valve via a cable, a wire, a pneumatic system, or an electric system. Hence, the pressure release valves may be configured to be activated mechanically, by pressure, or electrically. The pressure release valve may e.g., comprise a switch or a button that when activated opens the valve. Pressure release valves are well-known within the art of hydraulic or pneumatic actuators.

In one or more embodiments, the second emergency actuator is configured as a handle, turn knob, push button, or the like.

In one or more embodiments, the second emergency actuator is operably connected to said second pressure release valve via a cable, a wire, a pneumatic system, or an electric system.

In one or more embodiments, the first emergency actuator is configured as a handle, turn knob, push button, or the like.

In one or more embodiments, the first emergency actuator is operably connected to said first pressure release valve via a cable, a wire, a pneumatic system, or an electric system.

In one or more embodiments, the first emergency actuator is positioned on or integrated into a side face of said swing-out ramp. This configuration reduces the risk that a user may damage the first emergency actuator by stepping on it or by rolling his or her wheelchair over it. To further protect the first emergency actuator, the swing-out ramp may preferably comprise a protective shield adapted for protecting said first emergency actuator from damage. The protective shield may be configured as a plate, bar, box, or frame, preferably extending out from the side face of said swing-out ramp.

In one or more embodiments, the first emergency actuator is configured as a handle, turn knob, push button, or the like, and operably connected to said first pressure release valve via a cable, a wire, a pneumatic system, or an electric system; and wherein said protective shield comprises:
- an inner cover made from a transparent polymeric material, thereby allowing said first emergency actuator to be visible therethrough, adapted for covering said first emergency actuator, and hingedly attached to the side face of said swing-out ramp, thereby allowing access to said first emergency actuator; and
- an outer cover, preferably of steel, configured as a plate, bar, box with cutouts or holes, or frame extending out from the side face of said swing-out ramp and adapted for covering a part of said inner cover;
wherein said outer cover is configured to allow said inner cover to be opened through or past said outer cover, or configured to be opened, such that said inner cover may be opened through said outer cover. This configuration allows for optimal protection of the first emergency actuator, and at the same time secures that a person can recognize and see the first emergency actuator through its shield.

In one or more embodiments, the first emergency actuator is positioned at a height, relative to the ground on which the vehicle rests, within the range of 100-160 cm, such as within the range of 110-150 cm, preferably within the range of 120-140 cm. This position has two purposes. First, this height range will secure that a person will notice it, but also secures that a wheelchair user can reach it.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows a perspective view of a vehicle according to various embodiments of the present invention, where the swing-out ramp is shown in a lowered position.
Figure 2 shows a closeup view of detail A of Figure 1.
Figure 3 shows a side view of a vehicle according to various embodiments of the present invention, where the first emergency actuator is protected with a shield shown in a closed configuration.
Figure 4 shows a closeup view of detail A of Figure 1.
Figure 5 shows a side view of a vehicle according to various embodiments of the present invention, where the first emergency actuator is protected with a shield shown in a partly open configuration.
Figure 6 shows a closeup view of detail A of Figure 1.

### Detailed description of the invention

The following description is to be seen as a non-limiting example of a vehicle with a combined entrance and emergency exit according to various embodiments of the present invention.

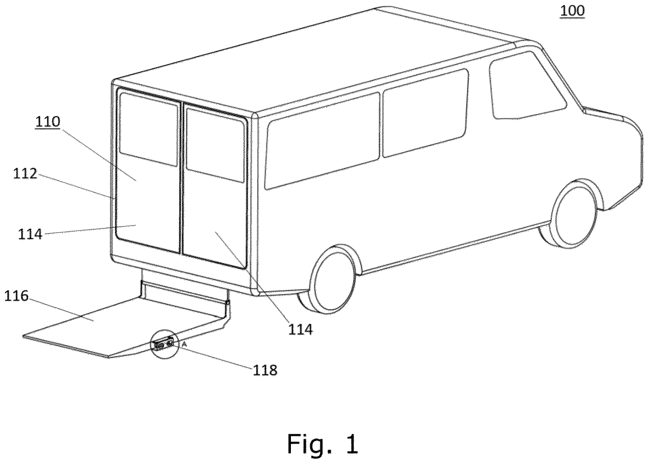

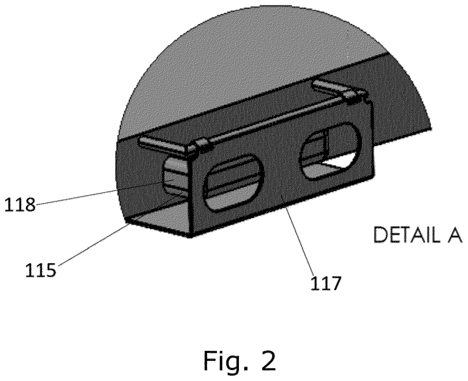

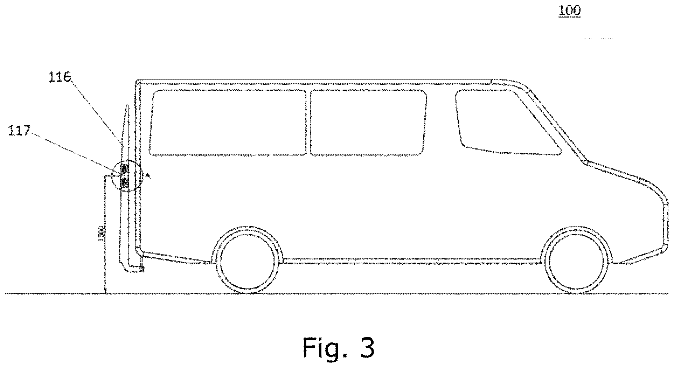

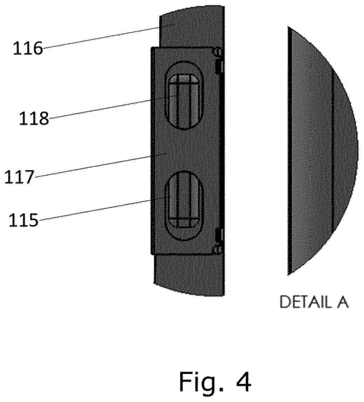

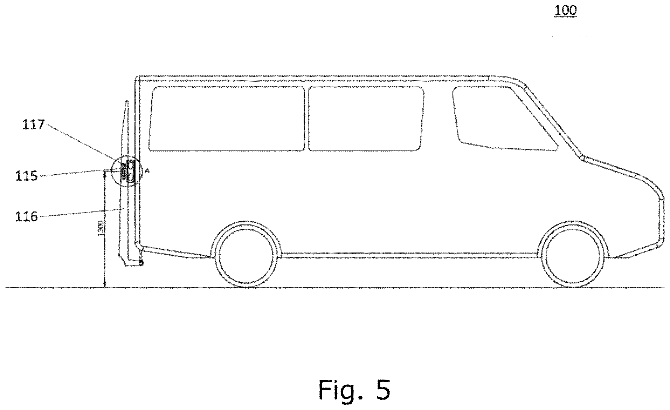

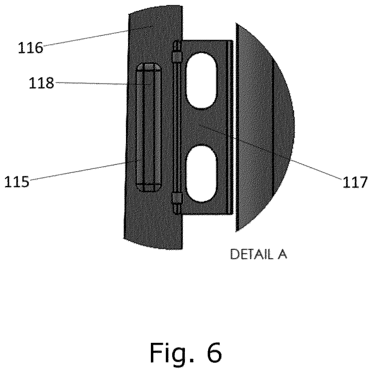

Figure 1 shows a perspective view of a vehicle 100 according to various embodiments of the present invention. The vehicle 100, here a minivan, has a combined entrance and emergency exit 110 for passengers located at the rear end of said vehicle 100. The combined entrance and emergency exit 110 comprises two doors 114 covering an entrance opening 112 to an interior passenger compartment of said vehicle 100, and a hydraulic or pneumatic operated ramp assembly comprising a swing-out ramp 116. The swing-out ramp 116 is adapted to be positioned in front of said doors 114 in its retracted and raised position (see Figures 3 and 5), thereby blocking said doors 114 from being opened, and adapted to be positioned at a lower level than said doors 114 (see Figure 1) in its forwarded and lowered position, thereby allowing said doors 114 to be opened. Obviously, but not shown, the hydraulic or pneumatic operated lift and/or ramp assembly further comprises one or more hydraulic or pneumatic actuators operably connected to said swing-out ramp 116, and a pressure release valve (not shown) is operably coupled to a first emergency actuator 118. Most operated lift and/or ramp assemblies comprises such a pressure release valve coupled to an emergency actuator and are commercially available. Hence, the skilled person will know how this part of the construction should be mounted. When the pressure release valve is activated via the first emergency actuator 118, the fluid pressure in said one or more hydraulic or pneumatic actuators is lowered, and the swing-out ramp 116 will move from its retracted and raised position to its forwarded and lowered position. The first emergency actuator 118 is preferably configured as a handle, a turn knob, a push button, or the like, that is intuitive for a non-skilled person to operate. The first emergency actuator 118 is positioned on the side face of the swing-out ramp 116. Thereby, a random person passing by a vehicle accident site will intuitively see the first emergency actuator on the swing-out ramp, that is preferably colored red or yellow, or another color indicating emergency, and activate it to lower the swing-out ramp 116. Then the person can open the doors 114 to the passenger compartment and rapidly help the passengers inside. A protective shield is shown adapted for protecting the first emergency actuator 118 from damage. The protective shield comprises an inner cover 115 and an outer cover 117. The inner cover 115 is made from a transparent polymeric material, thereby allowing said first emergency actuator 118 to be visible therethrough. The inner cover 115 is hingedly attached to the side face of said swing-out ramp 116, thereby allowing access to said first emergency actuator 118. The outer cover 117, preferably made of steel or another material suitable for absorbing forces from an impact, is here configured as hinged frame extending out from the side face of said swing-out ramp. The inner 115 and outer 117 covers open perpendicular to each to allow said inner cover 115 to be opened past said outer cover. As can be seen in Figure 2, the outer cover 117 is configured with holes allowing a person to see the first emergency actuator 118 through the inner cover 115. Figures 3 and 4 show the outer cover 117 in a closed configuration, while Figures 5 and 6 show the outer cover 117 in an open configuration.

### References

- 100: Vehicle
- 110: Entrance and emergency exit
- 112: Entrance opening
- 114: Door
- 115: Inner cover
- 116: Swing-out ramp
- 117: Outer cover
- 118: First emergency actuator

## Claims

1. A vehicle (100), such as a bus, a minivan, or the like, with a combined entrance and emergency exit (110) for passengers, said combined entrance and emergency exit (110) comprising:
- a door or hatch (114) covering an entrance opening (112) to an interior passenger compartment of said vehicle (100); and
- a hydraulic or pneumatic operated lift and/or ramp assembly comprising a swing-out ramp (116) adapted to be positioned in front of said door or hatch (114) in its retracted and raised position, thereby blocking said door or hatch (114) from being opened, and adapted to be positioned at a lower level than said door or hatch (114) in its forwarded and lowered position, thereby allowing said door or hatch (114) to be opened;
wherein said hydraulic or pneumatic operated lift and/or ramp assembly further comprises one or more hydraulic or pneumatic actuators operably connected to said swing-out ramp (116), and a first pressure release valve operably coupled to a first emergency actuator (118), wherein said first pressure release valve, upon activation of said first emergency actuator (118), such as a handle, a turn knob, push button, or the like, is configured to lower the fluid pressure in said one or more hydraulic or pneumatic actuators, thereby lowering said swing-out ramp (116) from its retracted and raised position to its forwarded and lowered position; **characterized in that** said first emergency actuator (118) is positioned on said swing-out ramp (116) and/or integrated into said swing-out ramp (116).

2. The vehicle (100) according to claim 1, wherein said entrance opening (112) is located at the rear end of said vehicle (100).

3. The vehicle (100) according to any one of the claims 1-2, wherein said hydraulic or pneumatic operated lift and/or ramp assembly further comprises a second emergency actuator, such as a handle, a turn knob, push button, or the like, operably coupled to said pressure release valve, and wherein said second emergency actuator is positioned within said interior passenger compartment.

4. The vehicle (100) according to any one of the claims 1-2, wherein said hydraulic or pneumatic operated lift and/or ramp assembly further comprises a second pressure release valve operably coupled to a second emergency actuator, such as a handle, a turn knob, push button, or the like, wherein said second pressure release valve, upon activation of said second emergency actuator, is configured to lower the fluid pressure in said one or more hydraulic or pneumatic actuators, thereby lowering said swing-out ramp (116) from its retracted and raised position to its forwarded and lowered position; wherein said second emergency actuator is positioned within said interior passenger compartment.

5. The vehicle (100) according to any one of the claims 3-4, wherein said second emergency actuator is configured as a handle, turn knob, push button, or the like.

6. The vehicle (100) according to claim 5, wherein said second emergency actuator is operably connected to said second pressure release valve via a cable, a wire, a pneumatic system, or an electric system.

7. The vehicle (100) according to any one of the claims 1-6, wherein said first (118) emergency actuator is configured as a handle, turn knob, push button, or the like.

8. The vehicle (100) according to claim 7, wherein said first (118) emergency actuator is operably connected to said first pressure release valve via a cable, a wire, a pneumatic system, or an electric system.

9. The vehicle (100) according to any one of the claims 1-8, wherein said first emergency actuator (118) is positioned on or integrated into a side face of said swing-out ramp (116).

10. The vehicle (100) according to any one of the claims 1-8, wherein said first emergency actuator (118) is positioned on or integrated into a front face of said swing-out ramp (116).

11. The vehicle (100) according to any one of the claims 9-10, wherein said swing-out ramp (116) comprises a protective shield adapted for protecting said first emergency actuator (118) from damage.

12. The vehicle (100) according to claim 11, wherein said protective shield is configured as a plate, bar, box, or frame, preferably extending out from the side face of said swing-out ramp (116).

13. The vehicle (100) according to claim 11, wherein said first emergency actuator (118) is configured as a handle, turn knob, push button, or the like, and operably connected to said first pressure release valve via a cable, a wire, a pneumatic system, or an electric system; and wherein said protective shield comprises:
- an inner cover (115) made from a transparent polymeric material, thereby allowing said first emergency actuator (118) to be visible therethrough, adapted for covering said first emergency actuator (118), and hingedly attached to the side face of said swing-out ramp (116), thereby allowing access to said first emergency actuator (118); and
- an outer cover (117), preferably of steel, configured as a plate, bar, box with cutouts or holes, or frame extending out from the side face of said swing-out ramp and adapted for covering a part of said inner cover;
wherein said outer cover is configured to allow said inner cover to be opened through or past said outer cover, or configured to be opened, such that said inner cover may be opened through said outer cover.

14. The vehicle (100) according to any one of the claims 1-13, wherein said first emergency actuator (118) is positioned at a height, relative to the ground on which said vehicle (100) rests, within the range of 100-160 cm.

## Patentansprüche

1. Fahrzeug (100), wie ein Bus, ein Minivan oder dergleichen, mit einem kombinierten Eingang und Notausgang (110) für Insassen, wobei der kombinierte Eingang und Notausgang (110) Folgendes umfasst:
- eine Tür oder Klappe (114), die eine Eingangsöffnung (112) zu einem inneren Insassenraum des Fahrzeugs (100) abdeckt; und
- eine hydraulisch oder pneumatisch betriebene Hebe- und/oder Rampenanordnung, die eine ausschwenkbare Rampe (116) umfasst, die dazu angepasst ist, in ihrer zurückgezogenen und angehobenen Position vor der Tür oder Klappe (114) positioniert zu werden, wodurch die Tür oder Klappe (114) daran gehindert wird, geöffnet zu werden, und dazu angepasst ist, in einer niedrigeren Ebene als die Tür oder Klappe (114) in ihrer vorgeschobenen und abgesenkten Position positioniert zu werden, wodurch die Tür oder Klappe (114) geöffnet werden kann;
wobei die hydraulisch oder pneumatisch betriebene Hebe- und/oder Rampenanordnung ferner einen oder mehrere hydraulische oder pneumatische Aktuatoren, die mit der ausschwenkbaren Rampe (116) wirkverbunden sind, und ein erstes Druckablassventil, das mit einem ersten Notaktuator (118) wirkgekoppelt ist, umfasst, wobei das erste Druckablassventil konfiguriert ist, bei Aktivierung des ersten Notaktuators (118), wie eines Handgriffs, eines Drehknopfs, eines Druckknopfs oder dergleichen, den Fluiddruck in dem einen oder den mehreren hydraulischen oder pneumatischen Aktuatoren zu senken, wodurch die ausschwenkbare Rampe (116) aus ihrer zurückgezogenen und angehobenen Position in ihre vorgeschobene und abgesenkte Position abgesenkt wird; **dadurch gekennzeichnet, dass** der erste Notaktuator (118) auf der ausschwenkbaren Rampe (116) positioniert und/oder in die ausschwenkbare Rampe (116) integriert ist.

2. Fahrzeug (100) nach Anspruch 1, wobei sich die Eingangsöffnung (112) an dem hinteren Ende des Fahrzeugs (100) befindet.

3. Fahrzeug (100) nach einem der Ansprüche 1-2, wobei die hydraulisch oder pneumatisch betriebene Hebe- und/oder Rampenanordnung ferner einen zweiten Notaktuator, wie einen Griff, einen Drehknopf, einen Druckknopf oder dergleichen, umfasst, der mit dem Druckablassventil wirkgekoppelt ist, und wobei der zweite Notaktuator innerhalb des inneren Insassenraums positioniert ist.

4. Fahrzeug (100) nach einem der Ansprüche 1-2, wobei die hydraulisch oder pneumatisch betriebene Hebe- und/oder Rampenanordnung ferner ein zweites Druckablassventil umfasst, das mit einem zweiten Notaktuator, wie einem Griff, einem Drehknopf, einem Druckknopf oder dergleichen, wirkgekoppelt ist, wobei das zweite Druckablassventil konfiguriert ist, bei Aktivierung des zweiten Notaktuators den Fluiddruck in dem einen oder den mehreren hydraulischen oder pneumatischen Aktuatoren zu senken, wodurch die ausschwenkbare Rampe (116) aus ihrer zurückgezogenen und angehobenen Position in ihre vorgeschobene und abgesenkte Position abgesenkt wird; wobei der zweite Notaktuator innerhalb des inneren Insassenraums positioniert ist.

5. Fahrzeug (100) nach einem der Ansprüche 3-4, wobei der zweite Notaktuator als Griff, Drehknopf, Druckknopf oder dergleichen konfiguriert ist.

6. Fahrzeug (100) nach Anspruch 5, wobei der zweite Notaktuator über ein Kabel, einen Draht, ein pneumatisches System oder ein elektrisches System mit dem zweiten Druckablassventil wirkverbunden ist.

7. Fahrzeug (100) nach einem der Ansprüche 1-6, wobei der erste (118) Notaktuator als Griff, Drehknopf, Druckknopf oder dergleichen konfiguriert ist.

8. Fahrzeug (100) nach Anspruch 7, wobei der erste (118) Notaktuator über ein Kabel, einen Draht, ein pneumatisches System oder ein elektrisches System mit dem ersten Druckablassventil wirkverbunden ist.

9. Fahrzeug (100) nach einem der Ansprüche 1-8, wobei der erste Notaktuator (118) auf einer Seitenfläche der ausschwenkbaren Rampe (116) positioniert ist oder in diese integriert ist.

10. Fahrzeug (100) nach einem der Ansprüche 1-8, wobei der erste Notaktuator (118) auf einer Vorderfläche der ausschwenkbaren Rampe (116) positioniert oder in diese integriert ist.

11. Fahrzeug (100) nach einem der Ansprüche 9-10, wobei die ausschwenkbare Rampe (116) einen Schutzschirm umfasst, der zum Schützen des ersten Notaktuators (118) vor Beschädigungen angepasst ist.

12. Fahrzeug (100) nach Anspruch 11, wobei der Schutzschirm als Platte, Leiste, Kasten oder Rahmen konfiguriert ist, die/der sich bevorzugt von der Seitenfläche der ausschwenkbaren Rampe (116) aus erstreckt.

13. Fahrzeug (100) nach Anspruch 11, wobei der erste Notaktuator (118) als Handgriff, Drehknopf, Druckknopf oder dergleichen konfiguriert ist und mit dem ersten Druckablassventil über ein Kabel, einen Draht, ein pneumatisches System oder ein elektrisches System wirkverbunden ist; und wobei der Schutzschirm Folgendes umfasst:
- eine innere Abdeckung (115), die aus einem transparenten Polymermaterial hergestellt ist, wodurch der erste Notaktuator (118) durch diese hindurch sichtbar ist, und zum Abdecken des ersten Notaktuators (118) angepasst und gelenkig an der Seitenfläche der ausschwenkbaren Rampe (116) befestigt ist, wodurch ein Zugriff auf den ersten Notaktuator (118) ermöglicht wird; und
- eine äußere Abdeckung (117), bevorzugt aus Stahl, die als Platte, als Leiste, als Kasten mit Aussparungen oder Löchern oder als Rahmen konfiguriert ist, die/der sich von der Seitenfläche der ausschwenkbaren Rampe erstreckt und zum Abdecken eines Teils der inneren Abdeckung angepasst ist;
wobei die äußere Abdeckung konfiguriert ist, um zu ermöglichen, dass die innere Abdeckung durch oder an der äußeren Abdeckung vorbei geöffnet wird, oder konfiguriert ist, um geöffnet zu werden, sodass die innere Abdeckung durch die äußere Abdeckung geöffnet werden kann.

14. Fahrzeug (100) nach einem der Ansprüche 1-13, wobei der erste Notaktuator (118) relativ zu dem Boden, auf dem das Fahrzeug (100) ruht, in einer Höhe im Bereich von 100-160 cm positioniert ist.

## Revendications

1. Véhicule (100), tel qu'un bus, une minifourgonnette ou similaire, avec une entrée et une sortie de secours combinées (110) pour passagers, lesdites entrée et sortie de secours combinées (110) comprenant :
- une porte ou une trappe (114) recouvrant une ouverture d'entrée (112) vers un habitacle intérieur dudit véhicule (100) ; et
- un ensemble élévateur et/ou rampe à commande hydraulique ou pneumatique comprenant une rampe pivotante (116) conçue pour être positionnée devant ladite porte ou trappe (114) dans sa position rétractée et relevée, bloquant ainsi l'ouverture de ladite porte ou trappe (114), et conçue pour être positionnée à un niveau inférieur à celui de ladite porte ou trappe (114) dans sa position avancée et abaissée, permettant ainsi l'ouverture de ladite porte ou trappe (114) ;
dans lequel ledit ensemble élévateur et/ou rampe à commande hydraulique ou pneumatique comprend également un ou plusieurs actionneurs hydrauliques ou pneumatiques reliés de manière fonctionnelle à ladite rampe pivotante (116), et une première soupape de décharge de pression couplée de manière fonctionnelle à un premier actionneur d'urgence (118), dans lequel ladite première soupape de décharge de pression, lors de l'activation dudit premier actionneur d'urgence (118), tel qu'une poignée, un bouton rotatif, un bouton-poussoir ou similaire, est configurée pour abaisser la pression du fluide dans ledit ou lesdits actionneurs hydrauliques ou pneumatiques, abaissant ainsi ladite rampe pivotante (116) de sa position rétractée et relevée à sa position avancée et abaissée ; **caractérisé en ce que** ledit premier actionneur d'urgence (118) est positionné sur ladite rampe pivotante (116) et/ou intégré dans ladite rampe pivotante (116).

2. Véhicule (100) selon la revendication 1, dans lequel ladite ouverture d'entrée (112) est située à l'extrémité arrière dudit véhicule (100).

3. Véhicule (100) selon l'une quelconque des revendications 1 et 2, dans lequel ledit ensemble élévateur et/ou rampe à commande hydraulique ou pneumatique comprend également un second actionneur d'urgence, tel qu'une poignée, un bouton rotatif, un bouton-poussoir ou similaire, couplé de manière fonctionnelle à ladite soupape de décharge de pression, et dans lequel ledit second actionneur d'urgence est positionné à l'intérieur dudit habitacle intérieur.

4. Véhicule (100) selon l'une quelconque des revendications 1 et 2, dans lequel ledit ensemble élévateur et/ou rampe à commande hydraulique ou pneumatique comprend également une seconde soupape de décharge de pression couplée de manière fonctionnelle à un second actionneur d'urgence, tel qu'une poignée, un bouton rotatif, un bouton-poussoir ou similaire, dans lequel ladite seconde soupape de décharge de pression, lors de l'activation dudit second actionneur d'urgence, est configurée pour abaisser la pression de fluide dans ledit ou lesdits actionneurs hydrauliques ou pneumatiques, abaissant ainsi ladite rampe pivotante (116) de sa position rétractée et relevée à sa position avancée et abaissée ; dans lequel ledit second actionneur d'urgence est positionné à l'intérieur dudit habitacle intérieur.

5. Véhicule (100) selon l'une quelconque des revendications 3 et 4, dans lequel ledit second actionneur d'urgence est configuré sous forme d'une poignée, d'un bouton rotatif, d'un bouton-poussoir ou similaire.

6. Véhicule (100) selon la revendication 5, dans lequel ledit second actionneur d'urgence est relié de manière fonctionnelle à ladite seconde soupape de décharge de pression via un câble, un fil, un système pneumatique ou un système électrique.

7. Véhicule (100) selon l'une quelconque des revendications 1 à 6, dans lequel ledit premier actionneur d'urgence (118) est configuré sous forme d'une poignée, d'un bouton rotatif, d'un bouton-poussoir ou similaire.

8. Véhicule (100) selon la revendication 7, dans lequel ledit premier actionneur d'urgence (118) est relié de manière fonctionnelle à ladite première soupape de décharge de pression via un câble, un fil, un système pneumatique ou un système électrique.

9. Véhicule (100) selon l'une quelconque des revendications 1 à 8, dans lequel ledit premier actionneur d'urgence (118) est positionné sur ou intégré dans une face latérale de ladite rampe pivotante (116).

10. Véhicule (100) selon l'une quelconque des revendications 1 à 8, dans lequel ledit premier actionneur d'urgence (118) est positionné sur ou intégré dans une face avant de ladite rampe pivotante (116).

11. Véhicule (100) selon l'une quelconque des revendications 9 et 10, dans lequel ladite rampe pivotante (116) comprend un bouclier de protection adapté pour protéger ledit premier actionneur d'urgence (118) contre les dommages.

12. Véhicule (100) selon la revendication 11, dans lequel ledit bouclier de protection est configuré sous la forme d'une plaque, d'une barre, d'une boîte ou d'un cadre, se prolongeant de préférence à partir de la face latérale de ladite rampe pivotante (116) .

13. Véhicule (100) selon la revendication 11, dans lequel ledit premier actionneur d'urgence (118) est configuré sous la forme d'une poignée, d'un bouton rotatif, d'un bouton-poussoir ou similaire, et relié de manière fonctionnelle à ladite première soupape de décharge de pression via un câble, un fil, un système pneumatique ou un système électrique ; et dans lequel ledit bouclier de protection comprend :
- un couvercle intérieur (115) constitué d'un matériau polymère transparent, permettant ainsi audit premier actionneur d'urgence (118) d'être visible à travers celui-ci, adapté pour recouvrir ledit premier actionneur d'urgence (118), et fixé de manière articulée à la face latérale de ladite rampe pivotante (116), permettant ainsi l'accès audit premier actionneur d'urgence (118) ; et
- un couvercle extérieur (117), de préférence en acier, configuré sous la forme d'une plaque, d'une barre, d'une boîte avec des découpes ou des trous, ou d'un cadre se prolongeant à partir de la face latérale de ladite rampe pivotante et adapté pour recouvrir une partie dudit couvercle intérieur ;
dans lequel ledit couvercle extérieur est configuré pour permettre audit couvercle intérieur d'être ouvert à travers ou au-delà dudit couvercle extérieur, ou configuré pour être ouvert, de telle sorte que ledit couvercle intérieur puisse être ouvert à travers ledit couvercle extérieur.

14. Véhicule (100) selon l'une quelconque des revendications 1 à 13, dans lequel ledit premier actionneur d'urgence (118) est positionné à une hauteur, par rapport au sol sur lequel repose ledit véhicule (100), dans la plage de 100 à 160 cm.
